# EUROPEAN PATENT APPLICATION

(11) **EP 2 315 394 A1**
(43) Date of publication of application: **27.04.2011**
(21) Application number: 10188929.3
(22) Date of filing: 26.10.2010
(51) Int. Cl.: H04L 12/28, H04L 29/08

(54) **Control apparatus and control system**

(30) Priority: 26.10.2009 CN 200920219629 U
(71) Applicant: Huawei Device Co., Ltd., Longgang District Shenzhen Guangdong 518129 (CN)
(72) Inventor: Zhang, Xiaotian, 518129, Shenzhen (CN)
(74) Representative: Barth, Stephan Manuel

(57) **Abstract**

A control apparatus and a control system are provided. The control apparatus includes: an information receiving unit, configured to receive an operation request, which is sent by a user remotely via an auto configuration server (ACS), where the operation request carries a device identity of a device to be operated and an operation command; an address searching unit, configured to search, according to pre-stored configuration information which includes device identities and device addresses corresponding to the device identities, for a device address corresponding to the device identity; and a command sending unit, connected to the address searching unit and configured to send the operation command to the device corresponding to the found device address, so that the device performs an operation according to the operation command.

## Description

### FIELD OF THE INVENTION

The present invention relates to wireless communications technologies, and in particular, to a control apparatus and a control system.

### BACKGROUND OF THE INVENTION

The ZigBee technology is built based on IEEE 802.15.4 standard. It is a short-distance wireless communications technology with low power consumption. The existing ZigBee technology defines the wireless control network standard inside a home network for the interconnection of controlled devices inside a home. For example, electrical home appliances, such as refrigerators, TV sets, VideoCassette Recorders (VCRs), curtains, power switches, and safety sensors can all be remotely controlled through the ZigBee technology.

Because the ZigBee technology adopts the low power consumption IEEE 802.15.4 as its physical layer and link layer standard and defines a uniform device model for all electrical home appliances, the interoperability between electrical home appliances is greatly improved. Currently, the ZigBee wireless communication technology is only applied inside a home network and a home gateway can only manage data services of the home network.

During the implementation of the present invention, the inventor finds the following weakness in the prior art: The electrical home appliance subnet of the home network is separate from the external network and thus a user from the external network is unable to control or manage electrical home appliances in the home network remotely.

### SUMMARY OF THE INVENTION

The purpose of the embodiments of the present invention is to provide a control apparatus and a control system, so that a user can control devices in a home network remotely.

For the above purpose, a control apparatus is provided, including:
an information receiving unit, configured to receive an operation request, which is sent by a user remotely via an Auto Configuration Server (ACS), where the operation request carries a device identity of a device to be operated and an operation command;
an address searching unit, configured to search, according to pre-stored configuration information which includes device identities and device addresses corresponding to the device identities, for a device address corresponding to the device identity; and
a command sending unit, connected to the address searching unit and configured to send the operation command to the device corresponding to the found device address, so that the device performs an operation according to the operation command.

A control system including at least one control apparatus is provided, where:
the control apparatus is configured to: receive an operation request, which is sent by a user remotely via an ACS, where the operation request carries a device identity of a device to be operated and an operation command; search for a device address corresponding to the device identity according to pre-stored configuration information which includes device identities and device addresses corresponding to the device identities; and send the operation command to the device corresponding to the found device address, so that the device performs an operation according to the operation command.

The embodiments of the present invention provide the following beneficial effects: The control apparatus receives an operation request, which is sent by a user remotely via an ACS, and sends the operation request to the corresponding device, so that the device performs an operation according to the operation request, and thus, the user can control devices in the home network remotely.

### BRIEF DESCRIPTION OF THE DRAWINGS

The accompanying drawings are provided herein to facilitate further understanding of the present invention and constitute a part of the application without limiting the present invention. In the accompanying drawings:
FIG. 1 is a schematic view of the structure of a control apparatus according to a first embodiment of the present invention;
FIG. 2 is a working flowchart of the control apparatus according to the first embodiment of the present invention;
FIG. 3 is a schematic view of the structure of a control apparatus according to a second embodiment of the present invention;
FIG. 4 is a working flowchart of the control apparatus according to the second embodiment of the present invention;
FIG. 5 is a schematic view of the structure of a control system according to a third embodiment of the present invention; and
FIG. 6 illustrates an exemplary control system according to the third embodiment of the present invention.

### DETAILED DESCRIPTION OF THE INVENTION

To better explain the purpose, technical solution and beneficial effects of the present invention, the embodiments of the present invention are hereinafter described in detail with reference to the accompanying drawings. The exemplary embodiments of the present invention and the related descriptions are intended to explain the present invention and not to limit the present invention.

### Embodiment 1

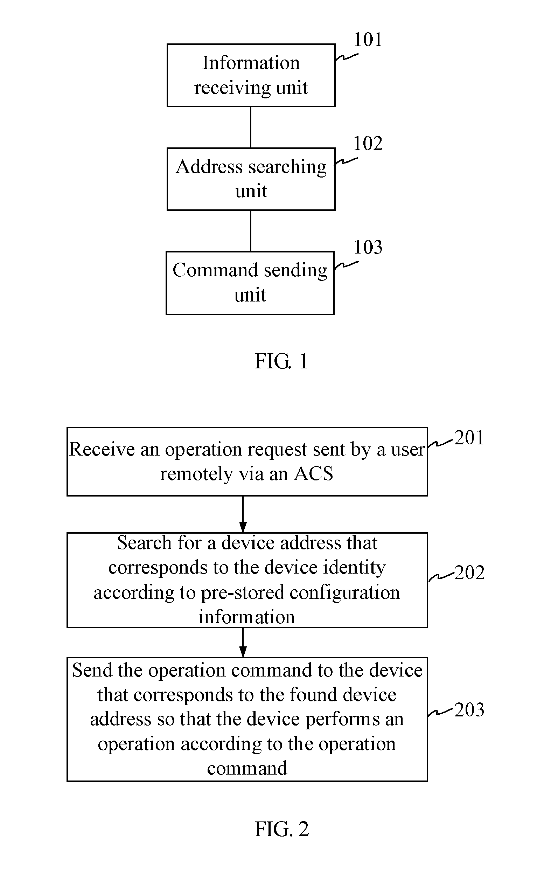

A control apparatus is provided according to the first embodiment of the present invention. As shown in FIG. 1, the control apparatus includes an information receiving unit 101, an address searching unit 102, and a command sending unit 103.

The information receiving unit 101 is configured to receive an operation request, which is sent by a user remotely via an ACS, where the operation request carries the device identity of the device to be operated and the operation command.

The address searching unit 102 is configured to search, according to pre-stored configuration information which includes device identities and device addresses corresponding to the device identities, for a device address corresponding to the device identity.

The command sending unit 103 is connected to the address searching unit 102 and configured to send the operation command to the device corresponding to the found device address, so that the device performs an operation according to the operation command.

In the embodiment, the control apparatus may be a home gateway.

In the embodiment, the device may be an electrical home appliance in a home network; the device identity may be a device name of each electrical home appliance in the home network, for example, the device name of a curtain, a lighting device controller, or a TV set; the device address may be a Media Access Control (MAC) address of the each electrical home appliance in the home network. The operation command may be a command for operating the electrical home appliance, for example, the command for turning on or turning off the curtain, lighting device controller, or TV set.

In the embodiment, the ACS may manage the home gateway, receive the operation request, which is sent by a user remotely, and forward the operation request to the home gateway, so that the home gateway controls a corresponding device according to the operation request.

In the embodiment, the operation request may be sent by the user remotely in the following way: A user logs in to a network server that manages the home network via a terminal device, such as a mobile terminal or a computer, and sends, via the homepage of the network server, the operation request to the ACS, so that the ACS sends the operation request to the corresponding home gateway.

The following description assumes that the control apparatus is a home gateway and describes the working procedure of the home gateway in detail. As shown in FIG. 2, the working procedure of the home gateway includes:
Step 201: The home gateway receives an operation request, which is sent by a user remotely via the ACS, where the operation request carries the device identity of the device to be operated and the operation command.
Step 202: The home gateway searches, according to pre-stored configuration information which includes device identities and device addresses corresponding to the device identities, for a device address corresponding to the device identity.
Step 203: The home gateway sends the operation command to the device corresponding to the found device address, so that the device performs a corresponding operation according to the operation command.

As seen from the above embodiment, the home gateway receives an operation request, which is sent by a user remotely via the ACS, and controls a device according to the operation request, so that the user can control home devices in the home network remotely.

### Embodiment 2

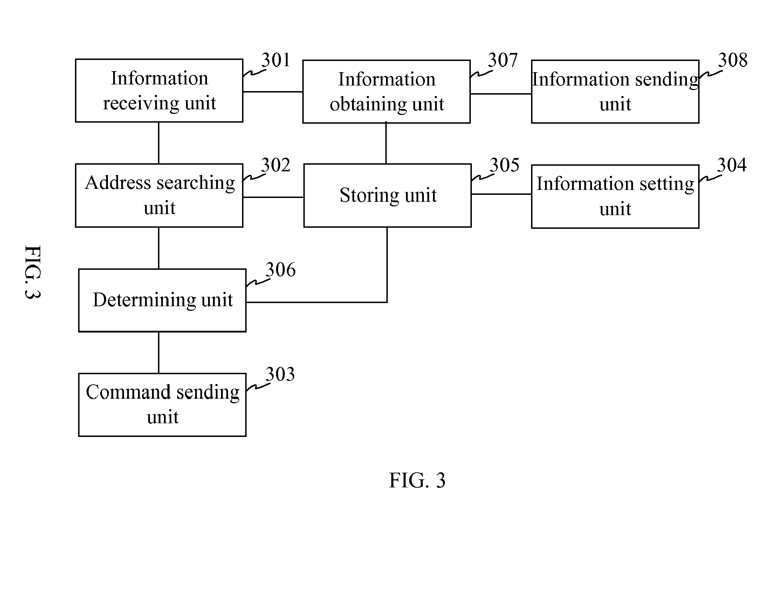

A control apparatus is provided according to the second embodiment of the present invention. As shown in FIG. 3, the control apparatus includes an information receiving unit 301, an address searching unit 302, and a command sending unit 303. The functions of the units of the control apparatus are similar to those in the first embodiment and are not described here.

As shown in FIG. 3, the control apparatus further includes an information setting unit 304 and a storing unit 305, where the information setting unit 304 is configured to set configuration information and the storing unit 305 is configured to store the configuration information set by the information setting unit 304. The configuration information may include device names and device addresses, or may further include a flag about whether to control a device.

In the case that the configuration information includes the flag of whether to send the operation command, upon receiving the operation request, the control apparatus first determines whether it is allowed to control the device according to the operation request according to the flag. In this case, as shown in FIG. 3, the control apparatus may further include a determining unit 306, configured to determine, according to the pre-stored configuration information, whether it is allowed to control the device according to the operation request. The command sending unit 303 is further configured to send the operation command to the device corresponding to the found device address when the determining unit 306 determines that it is allowed to control the device according to the operation request.

In addition, the control apparatus may receive a state query request, which is sent by the user remotely via the ACS, and send the query request to the corresponding device. In this case, as shown in FIG. 3, the control apparatus further includes an information obtaining unit 307 and an information sending unit 308. The information receiving unit 301 is further configured to receive the state query request, which is sent by the user remotely via the ACS, where the state query request carries the device identity of the device to be queried for. The information obtaining unit 307 is configured to obtain, according to the device identity, the current state information of the device. The information sending unit 308 is configured to send the current state information of the device, obtained by the information obtaining unit 307, to the ACS, so that the ACS delivers the current state information to the user via the network.

The storing unit 305 is further configured to store the current state information of the device obtained by the information obtaining unit 307.

In the embodiment, the control apparatus may be a home gateway which communicates with the user via the ACS.

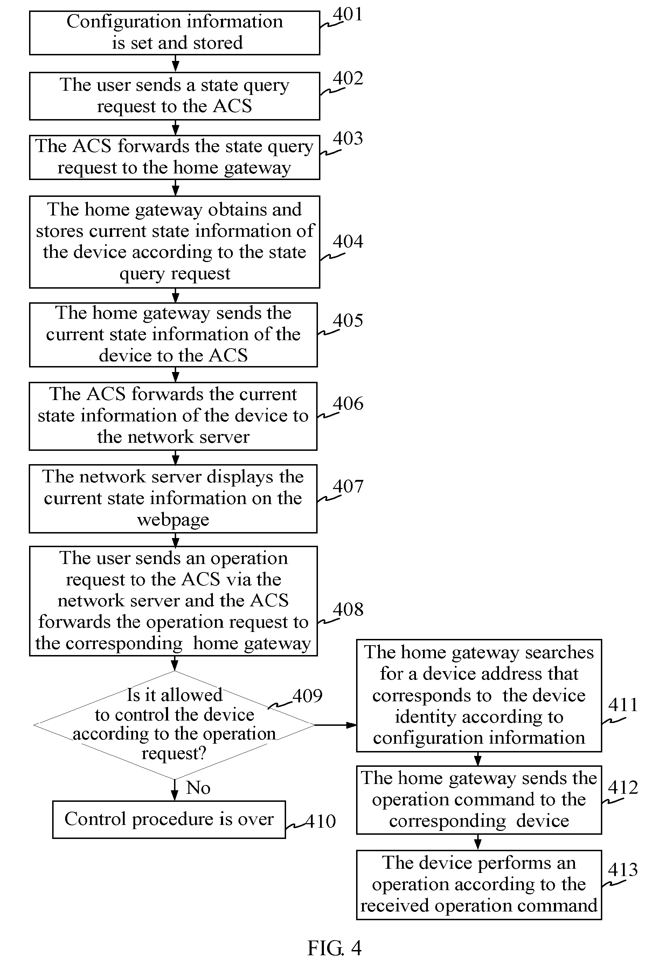

The following description assumes that the control apparatus is a home gateway and describes the working procedure of the home gateway in detail. As shown in FIG. 4, the working procedure of the home gateway includes:
Step 401: A user sets configuration information on the home gateway and stores the configuration information. The configuration information may include the device identities and device addresses of the home devices managed by the home gateway.

The configuration information may further include a flag about whether to control a device, so that the home gateway can decide, according to the flag, whether to send an operation command to the corresponding home device.

In the embodiment, the device identity may be a device name or a device serial number; the device address may be an MAC address of each electrical home appliance in the home network.

Step 402: The user logs in to the webpage of a network server via a terminal device of the user, and sends a state query request to the ACS, requesting the current state information of an electrical home appliance. The state query request may carry the identity of the device.

In the embodiment, the terminal device of the user may be a mobile phone or a computer.

The following takes the query of the state information about a curtain as an example.

Step 403: After receiving the query request, the ACS sends the state query request to the corresponding home gateway, requesting the current state of the curtain.

Step 404: After receiving the state query request, the home gateway obtains the current state information of the curtain and stores the current state information.

In the embodiment, the current state information of the curtain may be obtained in the following way:

The home gateway determines, according to the pre-stored configuration information, the address of the curtain, and sends, according to the address, the state query request to the curtain; upon receiving the state query request, the curtain reports its current state information to the home gateway. For example, the current state of the curtain is open. In this way, the current state information is obtained through an interaction between the home gateway and the home device.

Step 405: After obtaining the current state information of the curtain, the home gateway sends the current state information to the ACS.

Step 406: After receiving the current state information of the curtain, reported by the home gateway, the ACS delivers the current state information about the curtain to the network server.

Step 407: After obtaining the current state information, the network server displays the current state information on the webpage, so that the user knows that the curtain is currently open.

Step 408: After the user knows the current state of the curtain, if the user desires to close the curtain, the user sends an operation request to the ACS via the network server, and the ACS delivers the operation request to the corresponding home gateway. The operation request carries the device identity of the device to be operated and an operation command. The operation command is: to close the curtain.

In the embodiment, sending an operation request via the network server may be accomplished in the same way as that adopted when sending the state query request.

Step 409: After receiving the operation request, if the pre-stored configuration information includes the flag about whether to control the device, the home gateway determines, according to the pre-stored confirmation information, whether it is allowed to control the device according to the operation request; if the home gateway determines that it is allowed to control the device according to the operation request, the procedure proceeds to step 411; if the home gateway determines that it is not allowed to control the device according to the operation request, the procedure proceeds to step 410.

Step 410: The control procedure ends.

Step 411: The home gateway searches, according to the pre-stored configuration information, for a device address corresponding to the device identity.

In the embodiment, the home gateway searches for the address of the curtain.

Step 412: After the address of the curtain is found, the home gateway sends the operation command to the corresponding device according to the device address.

Step 413: Upon receiving the operation command, the device performs an operation according to the operation command.

In the embodiment, the curtain is closed when the operation request is received. The home gateway may return the operation result to the user after the curtain is closed.

As seen from the above embodiment, the home gateway receives an operation request, which is sent by a user remotely via the ACS, and controls a device according to the operation request, so that the user controls home devices in the home network remotely. In addition, the home gateway may receive a state query request, which is sent by a user remotely via the ACS, and query for the current state of a home device, so that the user manages the home device according to the obtained current state.

### Embodiment 3

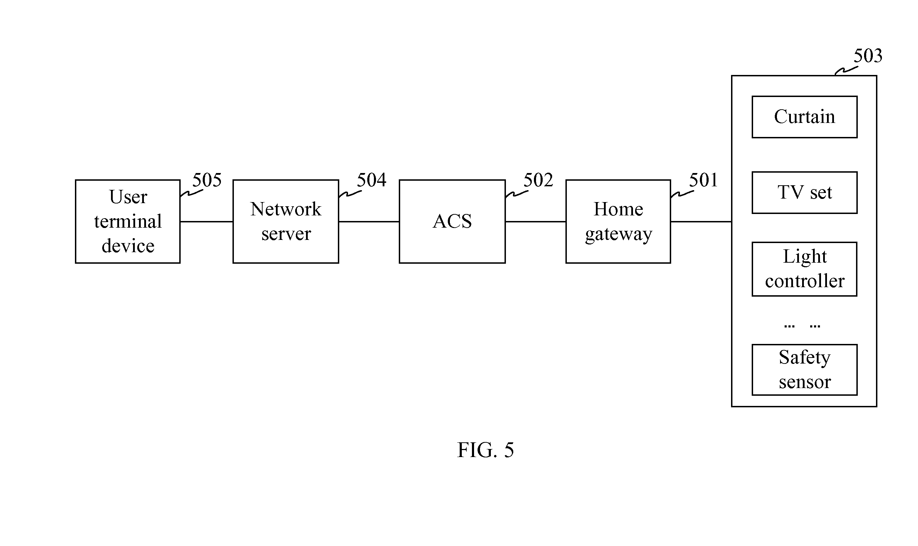

A control system is provided according to the third embodiment of the present invention. As shown in FIG. 5, the control system includes at least one home gateway 501. The home gateway 501 may be the control apparatus according to the first embodiment or the second embodiment of the present invention, and is not described here.

As shown in FIG. 5, the control system further includes home devices 503. Each home device 503 is connected to the home gateway 501 and configured to receive an operation command sent by the home gateway 501 and perform an operation according to the operation command; or configured to receive a state query request sent by the home gateway 501 and send the current state information about a home device 503 to the home gateway 501.

In the embodiment, the home gateway 501 and the home devices 503 within the communication range of the home gateway 501 constitute a ZigBee network. In the case that there are multiple home gateways 501, each home gateway 501 and a home device 503 within the communication range of the home gateway 501 constitute a ZigBee network.

As shown in FIG. 5, the control system further includes an ACS 502. The ACS 502 is connected to the home gateway 501 and configured to receive an operation request, which is sent by a user remotely, and send the operation request to the corresponding home gateway 501, so that the home gateway 501 controls a home device within its communication range according to the information carried in the operation request; or the ACS 502 is further configured to: receive a state query request, which is sent by a user remotely, and send the state query request to the corresponding home gateway 501, and receive the current state information of the home device, which is obtained and sent by the home gateway 501 according to the state query request, and send the current state information to the user via the network. In this way, home devices within the communication range of a home gateway 501 1 can be managed and controlled via the ACS 503.

As shown in FIG. 5, the control system further includes a network server 504, configured to receive the operation request or state query request sent by the user and send the operation request or state query request to the ACS 502.

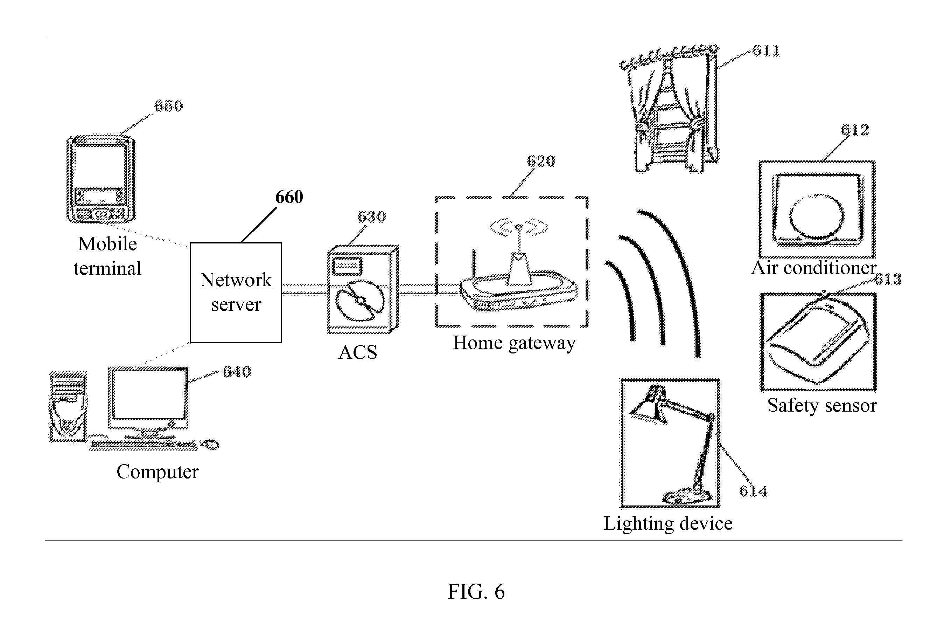

FIG. 6 illustrates a detailed exemplary control system. As shown in FIG. 6, the control system includes:
one or more home devices, such as a curtain 611, an air conditioner 612, a safety sensor 613, and/or a lighting device 614;
a home gateway 620;
an ACS 630;
a network server 660;
a computer 640; and
a mobile terminal 650.

Each home device stores the device type and operation command of the home device. For example, the device type stored in the curtain 611 is ZigBee curtain and the operation command is open/.

The home gateway 620 can search home devices within the ZigBee communication range to constitute a home network and the home gateway 620 can communicate with home devices within its communication range. The home gateway 602 stores the preset configuration information. The configuration information may include the device identity (such as FriendlyName), device address (Address), and flag about whether to control the device (Action). The configuration information may further include a description of the device (DeviceDescriptor) and the number of home devices (NumberOfZigBeeDevices).

When the user logs in to the network server via the computer 640 or mobile terminal 650, the home network service center webpage provided by the operator may be displayed on the display interface of the computer 640 or mobile terminal 650. In this way, the user can send a query request via the webpage to know the current state information of each home device in the home network or send an operation request to control each home device in the home network.

When the user desires to close the curtain 611 at home, the user enters, via the webpage, an operation instruction to close the curtain 611. The network server 660 packs, through TR098, the device name of the curtain 611 and the operation command for closing the curtain 611, and sends, via the ACS 630, the package to the home gateway 620.

The home gateway 620 searches, according to the received device name, for the MAC address of the curtain 611, and sends, according to the MAC address of the curtain 611, the operation command to the curtain 611 by using the ZigBee protocol. The curtain 611 receives the close command forwarded by the home gateway 620 and executes the close operation, so as for the user to control the curtain 611 in the home network remotely.

As seen from the above embodiment, the home gateway receives, via the ACS, an operation request, which is sent by a user remotely, and controls a device according to the operation request. This enables the user to control home devices in the home network remotely. In addition, the home gateway may receive a state query request, which is sent by a user remotely via the ACS, and query for the current state of a home device This enables the user to manage the home device according to the obtained current state.

Although the purpose, technical solution and beneficial effects of the present invention have been described in detail through exemplary embodiments, the invention is not limited to such embodiments. It is apparent that those skilled in the art can make various modifications and variations to the present invention without departing from the scope of the present invention. The present invention is intended to cover the modifications and variations provided that they fall within the scope of protection defined by the claims or their equivalents.

## Claims

1. A control apparatus, **characterized by** comprising:
an information receiving unit (101), configured to receive an operation request, which is sent by a user remotely via an auto configuration server (ACS), wherein the operation request carries a device identity of a device to be operated and an operation command;
an address searching unit (102), configured to search, according to pre-stored configuration information which comprises device identities and device addresses corresponding to the device identities, for a device address corresponding to the device identity; and
a command sending unit (103), connected to the address searching unit and configured to send the operation command to the device corresponding to the found device address, so that the device performs an operation according to the operation command.

2. The control apparatus according to claim 1, wherein
the configuration information further comprises a flag about whether to send the operation command;
the control apparatus further comprises: a determining unit (306), configured to determine, according to the pre-stored configuration information, whether it is allowed to control the device according to the operation request; and
the command sending unit is further configured to send the operation command to the device corresponding to the found device address when the determining unit determines that it is allowed to control the device according to the operation request.

3. The control apparatus according to claim 1, wherein:
the information receiving unit is further configured to receive a state query request, which is sent by a user remotely via the ACS, wherein the state query request carries a device identity of a device to be queried for;
the control apparatus further comprises:
an information obtaining unit (307), configured to obtain current state information of the device according to the device identity; and
an information sending unit (308), configured to send the current state information obtained by the information obtaining unit to the ACS, so that the ACS sends the current state information to the user via a network.

4. The control apparatus according to claim 3, further comprising:
a first storing unit, configured to store the current state information of the device obtained by the information obtaining unit.

5. The control apparatus according to claim 1, further comprising:
an information setting unit (304), configured to set the configuration information; and
a second storing unit, configured to store the configuration information set by the information setting unit.

6. A control system, **characterized by** comprising at least one control apparatus according to any one of claims 1_{―}5.

7. The control system according to claim 6, further comprising an Auto Configuration Server (ACS) (502), wherein:
the ACS is connected to the control apparatus and configured to receive an operation request, which is sent by a user remotely, and send the operation request to an corresponding control apparatus, so that the control apparatus controls the device according to information carried in the operation request; or
the ACS is further configured to receive a state query request, which is sent by a user remotely, and send the state query request to a corresponding control apparatus; and configured to receive current state information of a device, which is obtained and sent by the control apparatus according to the state query request, and send the current state information to the user via a network.

8. The control system according to claim 7, further comprising a network server (504), which is configured to receive the operation request or the state query request sent by the user and send the operation request or the state query request to the ACS.

9. The control system according to claim 6, further comprising a home device (503), which is connected to the control apparatus and configured to receive the operation command sent by the control apparatus and perform an operation according to the operation command, or configured to receive the state query request sent by the control apparatus and send the current state information to the control apparatus.
